# EUROPEAN PATENT APPLICATION

(11) **EP 3 787 180 A1**
(43) Date of publication of application: **03.03.2021**
(21) Application number: 19216262.6
(22) Date of filing: 13.12.2019
(51) Int. Cl.: H02P 6/08

(54) **WOUND FIELD SYNCHRONOUS MACHINE SYSTEM WITH INCREASED TORQUE PRODUCTION AND METHOD OF OPERATION**

(30) Priority: 27.08.2019 US 201916551856
(71) Applicant: Hamilton Sundstrand Corporation, Charlotte, NC 28217-4578 (US)
(72) Inventor: HARKE, Michael C., DeForest, WI Wisconsin 53532 (US)
(74) Representative: Dehns

(57) **Abstract**

A method (100) of operating a wound field synchronous machine system includes comparing (102) a desired motion command signal with at least one of a feedback position signal and a feedback velocity signal to generate a torque command signal by a motion controller. A current command signal is then generated (104) by a current command generation module including additional harmonics of up to a six-step waveform as a function of the feedback position signal. A current regulator regulates a processed current feedback signal to the current command signal to generate a voltage command.

## Description

### BACKGROUND

The present disclosure relates to a wound field synchronous machine, and more particularly to a wound field synchronous machine system with increased torque production when operating in a motoring mode.

Conventional high-power electric machines are designed with sinusoidal back-emf and driven by sinusoidal currents in order to minimize losses in the machine. For these conventional machines, there are two primary ways to produce torque exploiting the fundamental component of flux linkage. They are field alignment torque (i.e., cross product of stator flux linkage and stator current vectors), and reluctance torque due to saliency. At the expense of increased machine losses, additional harmonics can be added to the back-emf waveform in order to optimize other aspects of the system, such as minimizing voltage ripple in a DC generation system

### BRIEF DESCRIPTION

A method of operating a wound field synchronous machine system according to one, non-limiting, embodiment of the present disclosure includes comparing a desired motion command signal with at least one of a feedback position signal and a feedback velocity signal to generate a torque command signal by a motion controller; generating a current command signal by a current command generation module including additional harmonics of up to a six-step waveform as a function of the feedback position signal; regulating a processed current feedback signal to the current command signal by a current regulator to generate a voltage command; and generating a plurality of switching signals based upon the voltage command signal and a Direct Current (DC) link voltage by a Pulse Width Modulator (PWM).

Additionally, to the foregoing embodiment, the DC link voltage is estimated.

In the alternative or additionally thereto, in the foregoing embodiment, the DC link voltage is measured.

In the alternative or additionally thereto, in the foregoing embodiment, the DC link voltage is preprogrammed.

In the alternative or additionally thereto, in the foregoing embodiment, the additional harmonics of up to a six-step waveform is implemented by a square-wave implementation

In the alternative or additionally thereto, in the foregoing embodiment, the additional harmonics of up to a six-step waveform is implemented via a look-up table.

In the alternative or additionally thereto, in the foregoing embodiment, the additional harmonics of up to a six-step waveform is implemented by normalizing the torque command signal and each additional harmonic is scaled by a pre-established amount.

In the alternative or additionally thereto, in the foregoing embodiment, the system includes a wound field synchronous machine that is three phases, and the plurality of switching signals include three signals.

In the alternative or additionally thereto, in the foregoing embodiment, the method is conducted when the system is in a motoring mode.

A wound field synchronous machine system according to another, non-limiting, embodiment includes a wound field synchronous machine (WFSM) configured to send at least one of a position signal and a velocity signal; a feedback signal processing unit configured to receive the at least one of the position signal and the velocity signal; a plurality of conductors adapted to electrically power the WFSM, wherein the feedback signal processing unit is configured to receive a plurality of current feedback signals indicative of the current is each respective one of the plurality of conductors, and the feedback signal processing unit is configured to process the plurality of current feedback signals, the position signal, and the velocity signal to generate a feedback current feedback signal, a feedback position signal, and a feedback velocity signal; a motion controller configured to receive at least one of a position command signal and a velocity command signal and at least one of the feedback position signal and the feedback velocity signal, and thereby generate and output a torque command signal; a torque/current regulator configured to receive and process the torque command signal, the feedback position signal, and the feedback current signal, apply additional harmonics, and thereby generate and output a voltage command signal; a Pulse Width Modulator (PWM) configured to receive and process the voltage command signal and a Direct Current (DC) link voltage signal, and thereby output a plurality of switching signals; and a Voltage Source Inverter configured to receive the plurality of switching signals and DC voltage and thereby power the plurality of conductors based on the plurality of switching signals.

Additionally, to the foregoing embodiment, the torque/current regulator is further configured to generate at least one current command signal containing additional harmonics of up to a six-step waveform as a function of the feedback position signal.

In the alternative or additionally thereto, in the foregoing embodiment, the feedback position signal is indicative of a rotor position of the WFSM.

In the alternative or additionally thereto, in the foregoing embodiment, the additional harmonics of up to a six-step waveform is implemented by a square-wave implementation.

In the alternative or additionally thereto, in the foregoing embodiment, the additional harmonics of up to a six-step waveform is implemented via a look-up table, where the torque command signal is normalized, and each additional harmonic is scaled by a pre-established amount.

In the alternative or additionally thereto, in the foregoing embodiment, the WFSM is a three phase WFSM, the plurality of switching signals consist of three switching signals, and the plurality of current feedback signals consist of three current feedback signals.

In the alternative or additionally thereto, in the foregoing embodiment, the additional harmonics is a six-step waveform.

In the alternative or additionally thereto, in the foregoing embodiment, the additional harmonics are added as a function of current command magnitude and electrical position.

### BRIEF DESCRIPTION OF THE DRAWINGS

The following descriptions should not be considered limiting in any way. With reference to the accompanying drawings, like elements are numbered alike:
FIG. 1 is a schematic of a Wound Field Synchronous Machine (WFSM) system as one exemplary embodiment of the present disclosure; and
FIG. 2 is a flow chart of a method of operating the WFSM system.
FIG. 3 is a series of graphs illustrating normalized trapezoidal back-emf, harmonic phase current and torque versus electrical position for a three-phase machine, and a harmonic current at 1, 0.7, and 0.5 PU for the fundamental negative 5^{th} and positive 7^{th} components;
FIG. 4 is a schematic illustrating a torque/command regulator of the WFSM system; and
FIG. 5 is series of graphs illustrating normalized trapezoidal back-emf, six-step phase current and torque versus electrical position for a three-phase machine.

### DETAILED DESCRIPTION

A detailed description of one or more embodiments of the disclosed apparatus and method are presented herein by way of exemplification and not limitation with reference to the Figures.

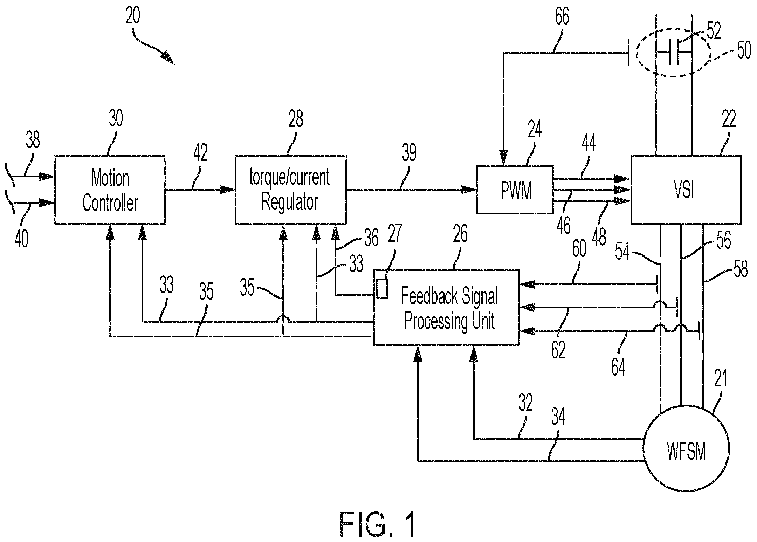

Referring to FIG. 1, a Wound Field Synchronous Machine (WFSM) system 20 is illustrated. The WFSM system 20 includes a WFSM 21, a Voltage Source Inverter (VSI) 22, a Pulse Width Modulator (PWM) 24, a feedback signal processing unit 26, a torque/current regulator 28 (i.e., torque/flux regulator), and a motion controller 30. The WFSM 21 constitutes both a synchronous motor and a synchronous generator. In one embodiment, the WFSM 21 is three (3) phase, with a field winding placed on a rotor and the armature winding placed on a stator. In another embodiment, the WFSM system 20 may not include the motion controller 30, and instead, a torque command is externally provided.

The WFSM 21 is configured to output and send a machine position signal (see arrow 32) and a machine velocity signal (see arrow 34) to the feedback signal processing unit 26. The position signal 32 and/or the velocity signal 34 may be measured or estimated.

An external sensor (e.g., a resolver) may be used to sense rotor position. Velocity may be calculated in the feedback signal processing unit 26 or read from a Resolver-to-Digital (RTD) converter. That is, the machine velocity signal 34 may be derived, or calculated from the position signal 32 within the feedback signal processing unit 26.

The feedback signal processing unit 26 is configured to transform (i.e., processes) the position and velocity signals 32, 34 into a current feedback signal (see arrow 36, i.e., current feedback) that is received by the torque/current regulator 28. From the feedback signal processing unit 26, the motion controller 30 and the torque/current regulator 28, also receive the position and velocity signals 32, 34 as feedback.

In one embodiment, the feedback signal processing unit 26 includes a state filter 27 configured to filter the position signal 32 and output a filtered position signal 33 (i.e., rotor position feedback). The velocity signal 34 may be received by the feedback signal processing unit 26 or calculated by the unit via use of the position signal 32, and the state filter 27 may be configured to then filter the velocity signal 34 and output a filtered velocity signal 35.

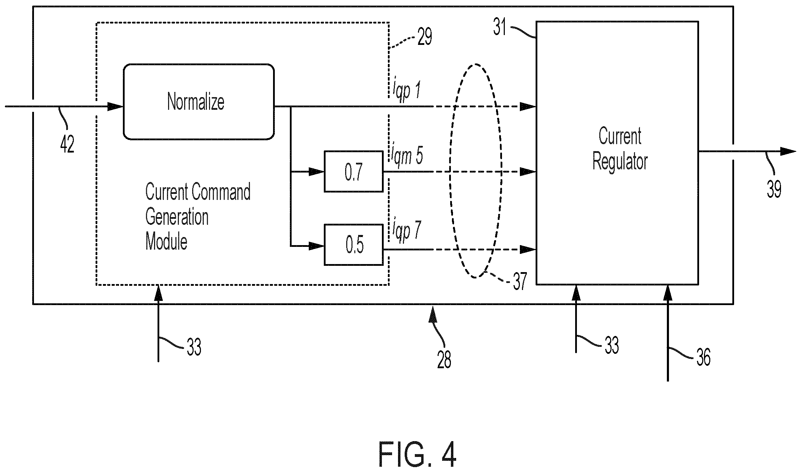

The motion controller 30 is also configured to receive a machine position command signal (see arrow 38) and a machine velocity command signal (see arrow 40). The command signals 38, 40 are compared to the respective filter position and velocity signals 33, 35, processed, and transformed into a torque command signal 42. The resulting torque command signal 42 is proportional to a q-axis current in the rotor synchronous reference frame (see FIG. 4). In another embodiment, the motion controller may only receive one of the machine position command signals 38 and the machine velocity command signal 40. It is understood that together, or individually, the command signals may be referred to as a motion command signal.

In one embodiment, and in a fan, pump, or engine starting application, the motion command signal may only be the velocity command signal 40. In another embodiment, or application, where the positioning of any variety of components is achieved, the motion command signal may only utilize the position command signal 38.

Referring to FIGS. 1 and 4, the torque/current regulator 28 includes a current command generation module 29 and a current regulator 31. The current command generation module 29 is configured to receive the torque command signal 42, and based on at least the filtered position signal 33 (i.e., feedback signal) is configured to add additional harmonics, or six-step waveform, as a function of the torque command magnitude (i.e., torque command signal 42) and electrical position (i.e., filtered position signal 33), thereby generating at least one current command signal (see arrow 37 in FIG. 4). The current command signal 37 may be multiple signals that are broken down into individual harmonic components, as shown in FIG. 4. In other embodiments, the components may be combined and processed as one signal.

The current regulator 31 is configured to receive the current command signal(s) 37, the filtered position signal 33 and the feedback current signal 36. The signals 33, 36, 37 are processed and transformed by the current regulator 31 and outputted as a voltage command signal (see arrow 39).

The voltage command signal (see arrow 39) is received by the PWM 24. The PWM 24 is configured to transform the voltage command signal 39 into a plurality of switching signals (i.e., three illustrated by arrows 44, 46, 48 for a three-phase system). The switching signals 44, 46, 48 are then received by the VSI 22. The VSI 22 is fed by a stiff Direct Current (DC) voltage 50. The DC voltage 50 is generally illustrated with a DC link capacitor 52.

For a three phase WFSM 21, three conductors, or windings, 54, 56, 58 extend between and are electrically connected to the VSI 22 and the WFSM 21. The feedback signal processing unit 26 is further configured to receive a measured phase current feedback signal (i.e., three illustrated as 60, 62, 64), with each current feedback signal 60, 62, 64 associated with the measured current through each respective conductor 54, 56, 58.

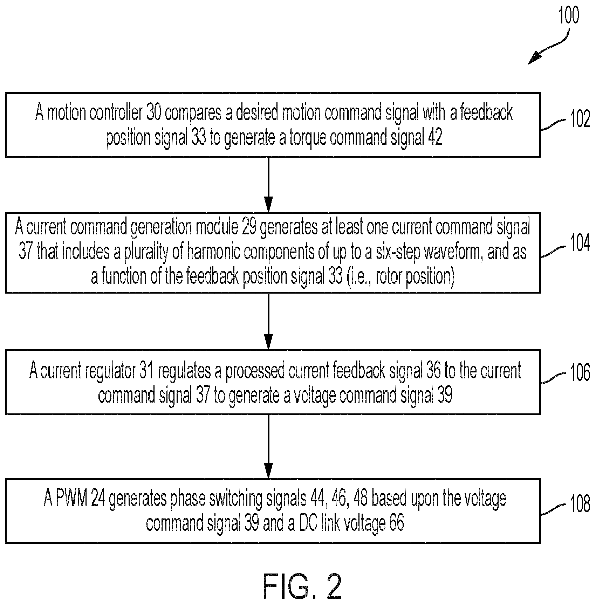

Referring to FIG. 2, with further reference to FIG. 1, a method 100 of operating the system 20 is illustrated. At block 102, the motion controller 30 compares the desired motion command (i.e., represented by at least one of the position and velocity command signals 38, 40) with the signal processed feedback (i.e., represented by the filtered position signal 33 and/or velocity signal 35) to generate the torque command signal 42. At block 104, the current command generation module 29 of the torque/current regulator 28 generates at least one current command signal 37 that includes a plurality of harmonic components of up to a six-step waveform, and as a function of the filtered position signal 33 (i.e., rotor position).

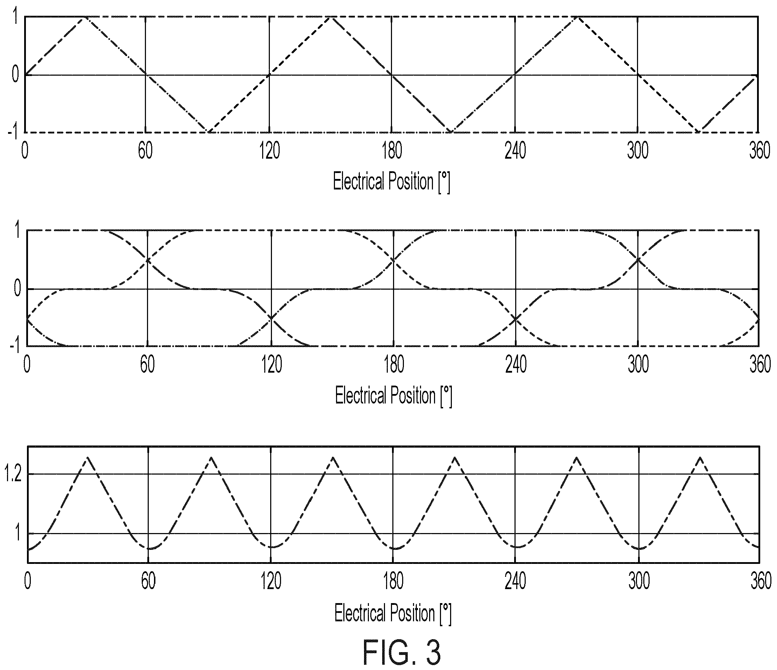

The implementation of additional harmonics, or six-step waveform, as a function of the current command magnitude and electrical position may be implemented by any one of several methods. One method is a square-wave implementation (i.e., like a brushless Direct Current (DC) machine) based on electrical position. Another method is a look-up table as a function of rotor position. Another method includes additional harmonic functions of rotor position. For example, and referring to FIGS. 3 and 4, the torque command signal 42 is normalized by the resulting mean torque (i.e., divided by about 1.08) and each additional harmonic used is scaled by a specified amount (i.e., a scale factor). In one example, the fifth harmonic may be scaled by 0.7 and the positive seventh harmonic may be scaled by 0.5. In FIG. 4, "iqp1" is the q-axis positive fundamental current command, "iqm5" is the q-axis negative/minus 5^{th} harmonic current command, and so on. The resulting current command harmonic components are either individually regulated via parallel synchronous from regulators, or combined (i.e., in the appropriate reference frame) and regulated via a relatively complex regulator, or hysteresis regulator. In addition to the q-axis control, there may be a d-axis (flux) regulation (i.e., regulator) for each harmonic (not depicted in FIG. 4). Since the field is externally applied for the WFSM, the d-axis commands may generally be zero and would be regulated.

At block 106, a current regulator 31 of the torque/current regulator 28 regulates the processed current feedback signal 36 to the current command signal 37. At block 108, the PWM 24 generates the phase switching signals 44, 46, 48 based upon the voltage command signal 39 and a measured, estimated, or otherwise assumed and preprogrammed, DC link voltage (i.e. represented as signal or data 66, see FIG. 1).

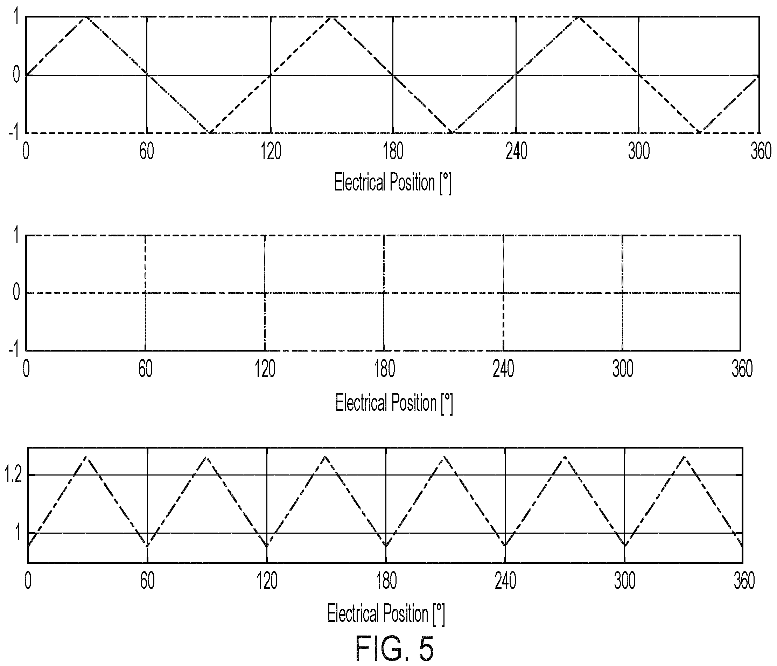

Additional flux linkage space harmonics present in the WFSM 21 are thus used to provide additional torque capability without increasing the peak current applied to the machine. That is, the current harmonics interact with the flux harmonic to produce additional DC torque as well as addition torque ripple at twice the harmonic frequency. This is accomplished within the torque/current regulator 28 and by the additional harmonic current (i.e., at the correct phase angle) which interacts with the flux linkage space harmonics to produce additional torque. While this technique maintains the same peak current, the RMS current will increase. Referring to FIGS. 3 and 5, the peak magnitudes of the currents 60, 62, 64 are illustrated with a normalized value of one (1), but the Resulting Mean Torque (RMS) of their waveform is increased.

The various functions described above may be implemented or supported by a computer program that is formed from computer readable program codes, and that is embodied in a computer readable medium. Computer readable program codes may include source codes, object codes, executable codes, and others. Computer readable mediums may be any type of media capable of being accessed by a computer, and may include Read Only Memory (ROM), Random Access Memory (RAM), a hard disk drive, a compact disc (CD), a digital video disc (DVD), or other forms.

Terms used herein such as component, application, module, system, and the like are intended to refer to a computer-related entity, either hardware, a combination of hardware and software, or software execution. By way of example, an application may be, but is not limited to, a process running on a processor, a processor, an object, an executable, a thread of execution, a program, and/or a computer. It is understood that an application running on a server and the server, may be a component. One or more applications may reside within a process and/or thread of execution and an application may be localized on one computer and/or distributed between two or more computers

The term "about" is intended to include the degree of error associated with measurement of the particular quantity based upon the equipment available at the time of filing the application.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present disclosure has been described with reference to an exemplary embodiment or embodiments, it will be understood by those skilled in the art that various changes may be made, and equivalents may be substituted for elements thereof without departing from the scope of the present disclosure. In addition, many modifications may be made to adapt a particular situation or material to the teachings of the present disclosure without departing from the essential scope thereof. Therefore, it is intended that the present disclosure not be limited to the particular embodiment disclosed as the best mode contemplated for carrying out this present disclosure, but that the present disclosure will include all embodiments falling within the scope of the claims.

## Claims

1. A method (100) of operating a wound field synchronous machine system comprising:
Comparing (102) a desired motion command signal with at least one of a feedback position signal and a feedback velocity signal to generate a torque command signal by a motion controller;
generating (104) a current command signal by a current command generation module including additional harmonics of up to a six-step waveform as a function of the feedback position signal;
regulating (106) a processed current feedback signal to the current command signal by a current regulator to generate a voltage command; and
generating (108) a plurality of switching signals based upon the voltage command signal and a Direct Current (DC) link voltage by a Pulse Width Modulator (PWM).

2. The method set forth in claim 1, wherein the DC link voltage is estimated, or
wherein the DC link voltage is measured, or
wherein the DC link voltage is preprogrammed.

3. The method set forth in claim 1 or 2, wherein the additional harmonics of up to a six-step waveform is implemented by a square-wave implementation

4. The method set forth in claim 1 or 2, wherein the additional harmonics of up to a six-step waveform is implemented via a look-up table.

5. The method set forth in claim 1 or 2, wherein the additional harmonics of up to a six-step waveform is implemented by normalizing the torque command signal and each additional harmonic is scaled by a pre-established amount.

6. The method set forth in any preceding claim, wherein the system includes a wound field synchronous machine that is three phases, and the plurality of switching signals include three signals.

7. The method set forth in any preceding claim, wherein the method is conducted when the system is in a motoring mode.

8. A wound field synchronous machine system comprising:
a wound field synchronous machine (WFSM) configured to send at least one of a position signal and a velocity signal;
a feedback signal processing unit configured to receive the at least one of the position signal and the velocity signal;
a plurality of conductors adapted to electrically power the WFSM, wherein the feedback signal processing unit is configured to receive a plurality of current feedback signals indicative of the current is each respective one of the plurality of conductors, and the feedback signal processing unit is configured to process the plurality of current feedback signals, the position signal, and the velocity signal to generate a feedback current feedback signal, a feedback position signal, and a feedback velocity signal;
a motion controller configured to receive at least one of a position command signal and a velocity command signal and at least one of the feedback position signal and the feedback velocity signal, and thereby generate and output a torque command signal;
a torque/current regulator configured to receive and process the torque command signal, the feedback position signal, and the feedback current signal, apply additional harmonics, and thereby generate and output a voltage command signal;
a Pulse Width Modulator (PWM) configured to receive and process the voltage command signal and a Direct Current (DC) link voltage signal, and thereby output a plurality of switching signals; and
a Voltage Source Inverter configured to receive the plurality of switching signals and DC voltage and thereby power the plurality of conductors based on the plurality of switching signals.

9. The wound field synchronous machine set forth in claim 8, wherein the torque/current regulator is further configured to generate at least one current command signal containing additional harmonics of up to a six-step waveform as a function of the feedback position signal.

10. The wound field synchronous machine set forth in claim 8 or 9, wherein the feedback position signal is indicative of a rotor position of the WFSM.

11. The wound field synchronous machine set forth in any of claims 8 to 10, wherein the additional harmonics of up to a six-step waveform is implemented by a square-wave implementation.

12. The method set forth in any of claims 8 to 11, wherein the additional harmonics of up to a six-step waveform is implemented via a look-up table, where the torque command signal is normalized, and each additional harmonic is scaled by a pre-established amount.

13. The wound field synchronous machine system set forth in any of claims 8 to 13, wherein the WFSM is a three phase WFSM, the plurality of switching signals consist of three switching signals, and the plurality of current feedback signals consist of three current feedback signals.

14. The wound field synchronous machine system set forth in in any of claims 8 to 13 wherein the additional harmonics is a six-step waveform.

15. The wound field synchronous machine system set forth in in any of claims 8 to 14 wherein the additional harmonics are added as a function of current command magnitude and electrical position.
